(19) Europäisches Patentamt

European Patent Office

Office européen des brevets

(11) **EP 1 486 769 A2**

(12) **EUROPEAN PATENT APPLICATION**

(43) Date of publication:
**15.12.2004 Bulletin 2004/51**

(51) Int Cl.$^7$: **G01N 21/00**

(21) Application number: **04076601.6**

(22) Date of filing: **01.06.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **12.06.2003 IT MO20030170**

(71) Applicant: **WAM S.p.A.**
**41030 Ponte Motta Cavezzo (Modena) (IT)**

(72) Inventor: **Passerini, Massimo**
**44100 Ferrara (IT)**

(74) Representative: **Gotra, Stefano**
**BUGNION S.p.A.**
**Via Emilia Est 25**
**41100 Modena (IT)**

(54) **A process and apparatus for analysing the composition of a powder mixture**

(57) One or more zones of a conduit through which powder mixtures flow are made transparent, and a resulting viewing zone or zones are illuminated in order to light an inside of the conduit at those zones. In a stage of the process images or reflected light from the illuminated zones are acquired from outside the conduit and processed by a software. The images or the reflected light are different according to types of powders included in the mixture. The apparatus comprises one or more viewing windows (1, 2) applied in a conduit (3), fibre optics or LEDS for illuminating the internal zone of the conduit corresponding to the viewing windows (1, 2), a digital camera (4) and a spectrometer (5) for acquiring images or light coming from the illuminated zone, and means for processing the images or light acquired by the digital camera or the spectrometer and for providing concentration values for types of powders included in the mixture.

Fig.1
Fig.2
Fig.3
Fig.4
Fig.5

EP 1 486 769 A2

## Description

The invention is applicable for analysis of powder mixtures of various types, such as for example powder mixtures for pharmaceutical use, for use in building work, for industrial use and the like, mixed by mixers but also by continuous mixer plants. It can however also be applied more generally for measuring the concentration of the various components of a mixture of loose solid materials of various granulometry.

The prior art contains plants or mixers which prepare mixed products by mixing powders of various granulometry; the mixtures thus obtained are sent, through conduits or connections, to subsequent working stages which use the materials. Notwithstanding the fact that the various powders which make up the mixtures are introduced into the mixers with very precise volumetric and weighted proportions, and also notwithstanding the fact that the mixers have an operative protocol which enables generally homogeneous mixtures to be obtained in predetermined times, the powders exiting from the mixers do not always have exactly the desired concentrations. It is therefore necessary to control the concentrations in order, as rapidly as possible, to intervene in the mixer programme and obtain the exact concentration required.

Generally, the prior art involves controlling the composition of the mixture, either periodically or at the end of mixing operations, or by periodically extracting small quantities of mixture from the mixer, for example by using sampling probes or by sending the mixture into special measuring conduits so that the required controls can be effected.

The periodic controls carried out on the mixture exiting from the mixer do not permit an adjustment in the concentration during the mixing stage, which, if the concentration is not the desired one, has to be repeated. The controls effected by sampling parts of the mixture require the use of mechanical instruments, which interact with the mixing operations, causing complications and problems.

The main aim of the present invention is to provide a process and apparatus which obviates the above-cited limitations and drawbacks in the prior art.

An advantage of the invention is to enable the measuring to be done without causing obstacles to the mixing, such as sampling probes or mechanical alterations to the conduit the mixture runs in, which not only cause obstacles during the operations but also are not easy to install on the mixers or on known machines.

A further advantage consists in effecting controls during the mixing stage and, consequently, immediate intervention in the case of wrong mixture concentrations.

A further advantage of the invention is that controls can be made on the granulometry and the colour of the powders.

These aims and advantages and others besides are all attained by the device of the invention, as it is characterised in the following claims.

Further characteristics and advantages of the present invention will better emerge from the detailed description that follows of the various stages of the process of the invention and of a preferred but non-exclusive embodiment of the apparatus of the invention, illustrated purely by way of a non-limiting example in the accompanying figures of the drawings, in which:

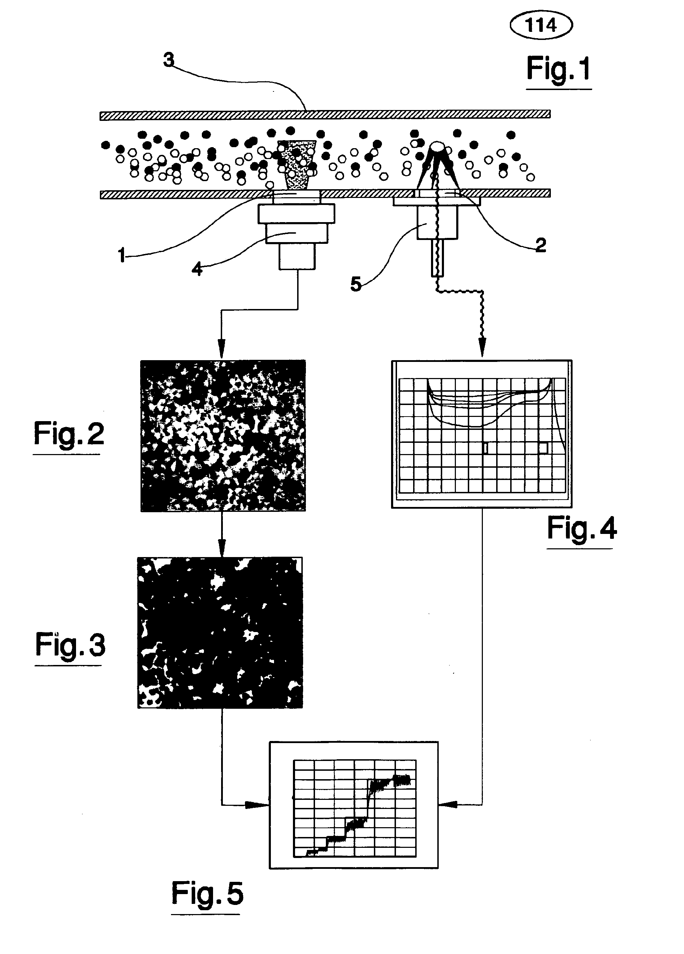

figure 1 is a schematic view of a possible embodiment of the apparatus of the invention;
figure 2 is an image of the apparatus obtained using a digital camera;
figure 3 is a processed image of figure 2;
figure 4 is a photometric spectrum obtained by the spectrometer of the apparatus;
figure 5 shows, by way of an example, a distribution of concentration values as functions of time, obtained using the apparatus of the invention, distributed on a diagram of theoretical concentration.

The process of the invention comprises a stage in which at least a zone of a conduit 3 in which the mixture flows is transparent, so that the inside of the conduit can be viewed. In particular, for reasons that will better emerge herein below, two zones in which the mixture flows are transparent. The conduit 3 therefore includes a first viewing window 1 and a second viewing window 2. Thus it is possible, after illuminating the internal zone of the conduit in the transparent zone, to view images and light inside the conduit (where the mixture is flowing) from the outside, using instruments for detection of known type. The resulting light or images from the moving mixture can then be analysed without having to perform any alteration on its normal processing pathway.

The material used to make the windows is surface-treated in order to prevent abrasion resulting from the powder mixture moving inside the conduit. To prevent any potential fouling of the internal surface of the windows, which is however not a great problem in the case of most commercially-used powder mixtures, a cleaning stage of the internal wall of the transparent zone is performed at regular time intervals, by compressed-air spraying of the wall; for this purpose an apparatus is provided which comprises a plurality of nozzles arranged internally of the conduit 3 and not illustrated in the figures of the drawings, which nozzles commandably spray compressed air onto the internal wall of each of the optical windows present on the conduit 3. A system control software can set off the nozzles whenever an unacceptable viewing situation due to poor window transparency is detected.

The means for detection used to perform the image detection stage can, for example, be a digital camera 4 which is arranged externally of the conduit 3 at the window 1 in order to acquire images in the illuminated zone inside the conduit 3.

The acquisition of images is rendered considerably difficult because the mixture is in motion internally of the conduit: for example, with equal illumination times, the exposure time has to be reduced by a factor of almost 1000 between a stationary mixture and a naturally-moving mixture in order to obtain equal-quality images (i.e. images that are not blurred).

It is also obvious that lower exposure times imply greater complications in the control hardware and software.

In more detail, the analysis of the image of the moving mixture is made by taking a high-resolution image of a zone of about 3x3mm internally of the window. The exposure time needed in order to have a still image of the mixture is very small (around 50-100 micro seconds - note that usual exposure times for cameras are of the order of tens of thousandths of seconds) and this creates considerable problems relating to the intensity of illumination needed for obtaining a practicable photograph.

For this reason, the process of the invention directs a concentrated light beam into the interested internal zone, generated by a light source coming from a powerful lamp, through a ring-shaped bundle of optic fibres. This ensures that all the light from the lamp is directed into the small examination zone. This produces enough light to acquire high-definition photographs, even working at exposure speeds of 50 micro seconds, the physical limits of the camera. This prevents an image of the moving mixture which is not "still" (ie. with a "rain" effect which would be produced at exposure times of greater than 200 micro seconds) - which would render an accurate processing of the image at best difficult and at worst impossible.

The means for detection for detecting the light coming from the illuminated zone can for example be a spectrometer 5 which is arranged externally of the conduit 3 at the window 1 in order to receive the reflected light from the various powders which are transiting in the illuminated zone inside the conduit; in particular the spectrometer measures the variation of a spectral component on the light reflected by one type of powder with respect to the light reflected by another type of powder.

In a case where the mixture of powders exhibits powders of various colours, the illumination stage is performed by directing a light into the zone to be lit, which light has a constant spectrum in the visible field; the light reflected by the powders is collected by a fibre optic system and sent to the spectrometer. As in the case of the image-taking, the most critical problem is presented by the mixture illumination system. The light directed onto the mixture under examination must first of all have a constant and known spectrum. The various components of the mixture, on the basis of their coloration, will reflect the light towards the spectrometer, each according to its own colouring.

For example, suppose that we begin with a light source having an emission spectrum which is constant in the visible range (i.e. in which the intensity of light in the red, green and blue is quite constant). If a white powder is lit with this light source, the light reflected onto the spectrometer will be of a different intensity but in a similar spectrum to the illuminating light (white). From the analysis of the reflected light no relevant information can be gathered. Now by mixing a small quantity of red powder into the white powder, the spectrum of reflected light will reveal a reduction in the complementary colour to the dominating colour of the added powder. Thus in the case of red powder there will be a diminution of the blue light reflected, as the blue component is absorbed by the red powder, in relation to the red light reflected. In the case of a blue powder the reverse would occur: there would be a diminution in the red light reflected in relation to the blue.

With the process and apparatus of the invention no absolute measures are performed, which are difficult to evaluate and are easily influenced by elements or external disturbances (such as for example light sources from normal room lights); relative measurements are always taken. This means that observation is always of a variation in one spectral component in relation to another. Thus there is a strong immunity to disturbances of any nature.

Experiments have shown that the variations in colour are very linear and repeatable. If, for example, 1% of red powder is mixed in with a white powder, in the return light spectrum there is a 1% reduction in blue with respect to red. If the concentration of the red powder is increased to 2%, the reduction in blue is of 2%, and so on. Thus excellent response linearity is obtained, up to a concentration of about 30% presence of the minority component. At higher concentrations there occurs a saturation phenomenon, with loss of sensibility. In a case where the powder mixture exhibits powders of the same colours (note that the above-described spectral analysis is able to distinguish very slight chromatic differences) good results have been obtained by performing the illumination stage with the involvement, in the zone to be illuminated, of a light having a constant spectrum in the infrared range.

When the camera or the spectrometer have taken the image or the reflected light, there follows a processing stage of the images or the reflected light in order to distinguish the images or lights coming from a determined type of powder from those coming from a different type of powder.

In cases where images are taken, once a still image has been acquired, the following procedure is observed.

The first image is transformed into HSL (Hue, Saturation, Lightness) coordinates. The Hue coordinate is an index which selects areas of different colours, varying from 0 to 255; for example, the red area is comprised between Hue values of 225 and 250, the blue are between 160 and 180, and so on. The saturation plane identifies the degree of purity of the colour; an intense red has a high degree of saturation while the white "background" has a low degree of saturation.

A digital filter is then applied in the 2 planes of the Hue and Saturation coordinates. If one of the components of the mixture to be identified is red, a filter with a red Hue phase filter will be used (comprised between 225 and 250), and so on for different colours.

By using the phase filter of the Hue and Saturation pair, the coloured details can be evidenced (even where the differences are slight) with respect to the background colour. In the case, for example of a powder with blue and yellow-white components (for example "Dixan", a brand of washing powder) the blue and yellow-white components are highlighted against the white background. The filtered image is then binarised, assigning value zero to the background (majority component, i.e with the higher level of concentration) and value 1 to the minority component (i.e. with lower concentration). These operations are repeated two or more times in order to identify two or more minority components.

The binarised image is then subjected to a further phase of elimination of any values which might be considered disturbances, so that the final evaluation stage can be proceeded to, on the binarised image cleaned of disturbances, i.e. the percentage of the various components of the mixture.

To carry out the above-described stages the image is processed by three further digital filtering algorithms. In the first of these (morphological erosion filter) any holes present internally of the binarised image corresponding to value 1 (minority colour) are eliminated. A second digital morphological filter eliminates the particles below a predetermined size and a third dilating morphological filter is used to bring the image back to its original size.

At this point the calculation of the percentage of the minority component with respect to a base component (majority) is given simply by the relationship of the areas of the region of the image having binary value 0 and binary value 1. The process includes several consecutive stages of detection and processing of the images; the various processed images coming from the various readings are transferred onto a dynamic diagram, or histogram, which updates in real-time. The x-coordinate axis of the histogram is the value of the measured concentration in single measurements, while the axis of ordinates is the number of measurements taken at a given concentration. The histogram further reports a theoretical diagram of concentration which enables a direct and immediate comparison to be made between the theoretical concentration values and the values actually measured. The width of the diagram obtained with the various values of measured concentration is in relation to the quality of the mixing of the mixture itself. Ideally the width is very narrow, i.e. all of the measurements carried out give the same concentration value; in reality there will be a certain width of distribution which can be experimentally placed in relation to the degree of mixing of the powders.

With the process and the apparatus of the invention, and with the software developed for the management thereof, 11 images per second can be processed.

Experiments have shown that the time necessary for acquiring a number of images which can give consistent measurement values from one test to another is about 2 minutes (11x120 images). Thus in the present state of the process the response time of the system based on imaging is 2 minutes.

From the sequence of images gathered it is also possible, using special software measuring the dimensions of the particles, to generate a diagram indicating the percentage distribution of the dimensions of the particles composing the mixture. This type of analysis is especially useful in a case where the particle size of a product made up of a mix of solid loose material is considered to be of importance; the mix might be a mixture of several components or might be all of a same component (which can however be considered a mixture of components, albeit the same). This type of analysis is particularly useful when it is required that the granulometry of the mixture of particles is all within a predetermined size interval of between a few tenths of a millimetre and a few millimetres, such as for example sugars, cereals, granular pharmaceutical products, and the like. In this case the images will be differentiated between "empty" and "full" and it will be possible to perform a measurement of the "full" images, i.e. the particles making up the product.

In the case of detecting the reflected light using the spectrometer, the measurement of concentration by spectral analysis is performed as follows.

A white light is directed onto the powder to be analysed, the white light having a sufficiently constant spectrum in the visible range. The light is generated by a multi-led system with emission of from 400nm to 700nm. It is preferable to use LEDs inasmuch as the use of a lamp might produce a similar spectrum but it would have far more fluctuation in the emitted power.

The white light is reflected by the powder with an intensity that is a function of the colour of the powder. For example, a powder containing particles of a given colour will reveal a reduction in the reflected complementary component of the actual colour of the particles.

The light reflected by the powders is collected by an optic fibre located on the external side of the window of the conduit internally of which the powder flows; the optic fibre sends the reflected light to the spectrometer which measures the variation of one spectral component with respect to another.

In the reflected spectrum of the mixture wavelengths $\lambda 1$ and $\lambda 2$ are experimentally identified, which are characteristics of the light reflected by two or more component elements of the mixture, and thus the intensities of the reflected light having the characteristic wave length of the various elements of the mixture are identified. For example, for a white mixture in which red powder is mixed in, the characteristic wave lengths are $\lambda 1$ = 530nm and $\lambda 2$ = 660nm.

Firstly experimental calibration curves are drawn up by running powders of known concentrations by the window (for example 1%, 2% etc.), with the powders being of various colouring. From this calibration curve two experimental coefficients are derived (gradient m_spe and known term (constant) q_spe of the calibration curve) which then enable the concentration value of a particular type of mixture to be derived according to linear relation:

$$\text{concentration} = \text{m\_spe} \times (\lambda\,1/\lambda\,2) + \text{q\_spe}$$

where $\lambda 1$ and $\lambda 2$ are the light intensities at the two preselected wavelengths, measured by the spectrometer during the measurement and m_spe and q_spe are the derived experimental coefficients for a given colour throughout the calibration.

In this case too an analysis of a "mixture" can be made, where the "mixture" is in fact composed of one component only. This type of analysis is especially useful in the case of fine powders, such as cement or the like, where the constancy of the composition and granulometry is to be verified (the granulometry being too fine to be correctly evaluated with an image analysis). For these powders, a particular colour corresponds to a determined composition or granulometry, and therefore there is a special wavelength in the reflected light which is characteristic of that colour. By verifying the variations in the spectral component of the reflected light it is possible to verify the change in the composition and granulometry of the powder.

The process of the invention includes use of one of the two detection methods (either image acquisition by camera or spectrographic reading of the reflected light).

It is however preferable not to base everything on one measuring technology alone, but to use both optical methods, which are independent of each other and can each give an autonomous measurement.

The processing system will interpret the data coming from the two measuring systems and will decide which datum to pass to the user. For some concentrations it may be better to use one system rather than the other, while for others the measurement will simply be a mean of the two measurements. In the process and apparatus of the invention the contemporaneous use of both methods is preferred, both applied on the exit channel of a mixer. This is because each of the techniques exhibits characteristics which render it more or less suitable according to what is to be measured. For example, the spectrometer method has shown itself to be easier to use and more precise for measurements where the minority component varies in a concentration degree comprised between 1% and 30%, while the image processing technique works better for between 0 and 1%, where it can better observe the presence of particles having a very low concentration (probably of a few parts per million), and is less effective, at least with the present technologies, for higher concentrations.

## Claims

1. A process for analysing a concentration of a powder mixture, **characterised in that** it comprises the following stages: making a transparent zone in at least one zone of a conduit in which the powder mixture flows, in order to allow viewing of inside the conduit; illumination of an internal zone of the conduit at the transparent zone thereof; detecting images or light coming from the illuminated zone from outside and using known-type instruments; processing the images or light detected by the instruments for detection, for distinguishing images or light coming from a type of powder from images or light coming from a different type of powder.

2. The process of claim 1, **characterised in that**: the stage of detection from the outside is performed using an instrument for detection which is a digital camera; the stage of illumination being performed by directing a concentrated light beam generated by a light source onto a zone to be illuminated.

3. The process of claim 2, **characterised in that** the processing stage of the images coming from the digital camera comprises following stages: transformation of an acquired image into HSL coordinates (Hue, Saturation and Lightness); digital filtration of an image when transformed according to the Hue and Saturation coordinates in order to evidence elements of one colour with respect to elements of another colour; binarisation of a filtered image in order to attribute a value (0) to one component of a mixture and a different value (1) to another component of a mixture; eliminating any values which are considered to be disturbances from the filtered image; evaluation, from the binarised image, of a percentage of various components of the mixture.

4. The process of claim 3, **characterised in that**: several consecutive stages of detection and processing are performed; various processed images coming from the various stages of detection are reported on a dynamic diagram.

5. The process of claim 1, **characterised in that**: the stage of external detection is performed using a detection instrument of a spectrometer type which measures a variation of a spectral component of reflected light from the powders with respect to another spectral component thereof; the illumination stage is performed by directing, onto a zone to be illuminated, a light having a visible-range constant spectrum; light reflected from the powders is collected by a fibre optic system and sent to the spectrometer.

6. The process of claim 5, **characterised in that** the processing stage of the images coming from the spectrometer comprises following stages: identification of two or more wavelengths ($\lambda 1$ and $\lambda 2$) which are characteristics of reflected light from two or more component elements of the mixture and identification of an intensity of the reflected light having the two or more wavelengths; determination, using mathematical calculations, of a concentration of each element using concentration parameters drawn from the spectrometer detection of same wavelengths in mixtures having a known concentration.

7. The process of claim 1, **characterised in that**: the stage of detection from outside is performed by a detection instrument of a spectrometer type, which measures a variation of a spectral component of reflected light from the powders with respect to another spectral component thereof; the illumination stage is performed by directing, onto a zone to be illuminated, a light having a constant infrared-range spectrum; light reflected from the powders is collected by the fibre optic system and sent to the spectrometer.

8. The process of claim 1, **characterised in that** it comprises a stage of cleaning an internal wall of the transparent zone, with a defined regularity, by spraying compressed air onto the internal wall.

9. The process of claim 1, **characterised in that**: it comprises a stage of creating two transparent zones in the conduit in which the mixture flows; in one of the transparent zones the image acquisition stage coming from the illuminated zone is performed by an instrument such as a digital camera; in the other of the transparent zones the acquisition of light coming from the illuminated zone is performed by an instrument such as a spectrometer.

10. An apparatus for analysing a concentration of a mixture of powders, **characterised in that** it comprises: at least one viewing window (1, 2) applied in a conduit (3) internally of which the mixture of powders flows; means for illuminating an internal zone of the conduit (3) at a location corresponding to the at least one viewing window (1, 2); means for detection of known type for acquiring images or light coming from an illuminated zone; means for processing the images or the light acquired by the means for detection and for providing concentration values of types of powders present in the mixture of powders.

11. The apparatus of claim 10, **characterised in that**: the means for detection comprise a digital camera (4); the means for illuminating comprise a ring of optic fibres, on which light generated by a light source is directed, for directing a concentrated beam of light into a zone to be illuminated.

12. The apparatus of claim 10, **characterised in that**: the means for detection comprise a spectrometer (5); the means for illuminating comprise a light beam having a constant visible-light spectrum; it comprises a fibre optic system for gathering reflected light from the powders and sending the reflected light to the spectrometer.

13. The apparatus of claim 11, **characterised in that**: the means for detection comprise a spectrometer (5); the means for illuminating comprise a light source with a constant spectrum in an infra-red range; it comprises a fibre optic system which gathers reflected light from the powders and sends the reflected light to the spectrometer.

14. The apparatus of claim 10, **characterised in that** it comprises a plurality of nozzles, arranged internally of the conduit (3), which plurality of nozzles is commanded to spray compressed air onto an internal wall of the at least one viewing window.

15. The apparatus of claim 10, **characterised in that**: it comprises a first viewing window (1) and a second viewing window (2); the means for detection comprise a digital camera (4) applied at the first viewing window (1); the means for illuminating comprising a ring of optic fibre, onto which light generated by a first light source is directed, the ring of optic fibre directing a concentrated beam of light onto a zone to be illuminated corresponding to the first viewing window (1); the means for detection comprising a spectrometer (5) which is applied at the second viewing window (2); the means for illuminating comprising a light source of a constant light for directing a light beam onto a zone to be illuminated corresponding to the second viewing window (2); it comprises a fibre optic system, arranged at the second viewing window (2) for collecting reflected light from the powders and sending the collected light to the spectrometer.

114

Fig.1

3

1

4

5

2

Fig.2

Fig.3

Fig.4

Fig.5